(19) Europäisches Patentamt
European Patent Office
Office européen des brevets

(11) **EP 1 076 676 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(21) Anmeldenummer: **99920761.6**

(22) Anmeldetag: **16.04.1999**

(51) Int Cl.[7]: **C08L 79/04**, C08L 79/06, H01M 8/10, H01M 8/02, C08L 71/00, B01D 71/62, B01D 71/80, C08L 81/06, C08J 5/22

(86) Internationale Anmeldenummer:
**PCT/EP1999/002755**

(87) Internationale Veröffentlichungsnummer:
**WO 1999/054407 (28.10.1999 Gazette 1999/43)**

(54) **ENGINEERING-IONOMERBLENDS UND ENGINEERING-IONOMERBLENDMEMBRANEN**
ENGINEERING IONOMERIC BLENDS AND ENGINEERING IONOMERIC BLEND MEMBRANES
MELANGES D'IONOMERES INDUSTRIELS ET MEMBRANES CONSTITUEES DESDITS MELANGES

(84) Benannte Vertragsstaaten:
**AT BE CH CY DE DK ES FI FR GB GR IE IT LI LU MC NL PT SE**

(30) Priorität: **18.04.1998 DE 19817374**

(43) Veröffentlichungstag der Anmeldung:
**21.02.2001 Patentblatt 2001/08**

(73) Patentinhaber: **Universität Stuttgart
70199 Stuttgart (DE)**

(72) Erfinder:
- **KERRES, Jochen
D-70619 Stuttgart (DE)**
- **ULRICH, Andreas
D-73734 Esslingen (DE)**
- **HÄRING, Thomas
D-70619 Stuttgart (DE)**

(74) Vertreter: **Luderschmidt, Schüler & Partner GbR
Patentanwälte,
Postfach 3929
65029 Wiesbaden (DE)**

(56) Entgegenhaltungen:
**EP-A- 0 354 040** **DE-A- 19 632 285**
**US-A- 4 020 142** **US-A- 4 842 740**
**US-A- 4 898 917** **US-A- 5 008 339**
**US-A- 5 393 432** **US-A- 5 525 436**
**US-A- 5 599 639**

- **CHEMICAL ABSTRACTS, vol. 117, no. 4, 22. Juli 1992 (1992-07-22) Columbus, Ohio, US; abstract no. 30999j, CHANDRA M. ET AL: "Removal of Uranium from acidic sulfate solution by ion exchange on polyvinyl pyridine and polybenzimidazole" Seite 286; XP002124110 & REACT. POLYM.R, Bd. 17, Nr. 2, 1992, Seiten 159-174,**
- **CHEMICAL ABSTRACTS, vol. 113, no. 14, 1. Oktober 1990 (1990-10-01) Columbus, Ohio, US; abstract no. 116309p, MAKHIJA S. ET AL : "Miscibility studies in blends of polybenzimidazoles and poly84-vinylpyridine)." XP002124111 & POLYMER. ENG. SCI. I, Bd. 30, Nr. 13 , 1990,**

EP 1 076 676 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der Erfindung sind neue kompatible binäre und ternäre Säure-Base-Polymerblends und Säure-base-Polymerblendmembranen.

Gegenstand der Erfindung ist des weiteren der Einsatz dieser binären und ternären Ionomerblendmembranen in Elektromembranprozessen wie Polymerelektrolytmembran-brennstoffzellen (PEFC), Direktmethanolbrennstoffzellen (DMFC) und Elektrodialyse und in anderen Membranprozessen wie Dialyse- und Umkehrosmose, Diffusionsdialyse, Gaspermeation, Pervaporation und Perstraktion.

Für Anwendungen von Ionomermembranen wie Polymerelektrolytmembranbrennstoffzellen (PEMFC), Direktmethanolbrennstoffzellen (DMFC), Polymerelektrolyt-membranelektrolyse (PEM-E) ist eine große chemische, mechanische und thermische Stabilität der Membran notwendig. Als bislang einziges verfügbares kommerziell verfügbares Ionomer erfüllt das perfluorierte Ionomer Nafion® (Grot, W. G.: Perfluorinated Ion-Exchange Polymers and Their Use in Research and Industry, Macromolecular Symposia, 82, 161-172 (1994)) die hohen Anforderungen an die chemische, mechanische und thermische Stabilität (Ledjeff, K.; Heinzel, A.; Mahlendorf, F.; Peinecke, V.: Die reversible Membran-Brennstoffzelle, Dechema-Monographien Band 128, VCH Verlagsgesellschaft, 103-118 (1993)). Jedoch weist es diverse Nachteile auf, die die Suche nach Alternativmaterialien notwendig machen:
Es ist sehr teuer (DM 1400.-/$m^2$). Das sehr komplexe Herstellverfahren beinhaltet hochtoxische Zwischenstufen (siehe Grot, W. G.). Die Umweltverträglichkeit von Nafion® ist kritisch zu bewerten: als perfluoriertes Polymer ist es schwer abbaubar. Die Recyclierbarkeit von Nafion® ist fraglich.

Bei Versuchen der Anwendung von Nafion® in Direktmethanol-Brennstoffzellen (DMFC) wurde festgestellt, daß es besonders bei Verwendung von reinem Methanol eine sehr hohe Methanol-Permeabilität aufweist (Surampudi, S., Narayanan, S. R.; Vamos, E.; Frank, H.; Halpert, G.; LaConti, A.; Kosek, J.; Surya Prakash, G. K.; Olah, G. A.: Advances in direct oxidation methanol fuel cells, J. Power Sources, 47, 377-385 (1994)) was die Energieeffizienz der DMFC durch Mischpotentialbildung stark verschlechtert.

Als Alternativmaterialien für die perfluorierten Ionomere kommen Arylhauptketten-Ionenaustauscherpolymere wie sulfoniertes Polyethersulfon (Nolte, R.; Ledjeff, K.; Bauer, M.; Mülhaupt, R.:Partially Sulfonated poly(arylene ether sulfone) - A Versatile Proton Conducting Membrane Material for Modern Energy Conversion Technologies Journal of Membrane Science 83, 211-220 (1993)) und sulfoniertes Poly(etheretherketon) (Helmer-Metzmann, F.; Ledjeff, K.; Nolte, R., et al.: Polymerelektrolyt-Membran und Verfahren zu ihrer Herstellung EP 0 574 791 A2) in Betracht, die als Nachteil jedoch eine hohe Sprödigkeit bei Austrocknung aufweisen, was für ihre Anwendung beispielsweise in Membranbrennstoffzellen ungünstig ist.

Bei der Suche nach thermisch und mechanisch hochstabilen Polymeren stößt man auf Polyimide, Imidazol enthaltende Polymere und Benzimidazole, die wie das Polybenzimidazol PBI Poly[(2,2'-m-phenylen)-5,5'-bibenzimidazol] der allgemeinen Formel:

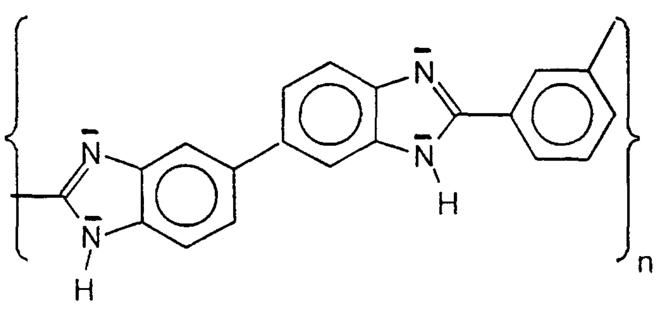

und das Polyetherimid Poly[2,2'-bis(3,4-dicarboxyphenoxy)phenylpropan-2-Phenylen-Bisimid] exzellente thermische Stabilitäten zeigen (Musto, P.; Karasz, F. E.; MacKnight, W. J.: Fourier transform infra-red spectroscopy on the thermooxidative degradation of polybenzimidazole and of a polybenzimidazole/polyetherimide blend, Polymer, 34(12), 2934-2945 (1993)).

Polybenzimidazole können mittels verschiedener Methoden sulfoniert werden. Ein möglicher Weg ist folgende Reaktionsfolge (Gieselman, M. B.; Reynolds, J. R.: Water-Soluble Polybenzimidazole-Based Polyelectrolytes, Macromolecules 25(18, 4832-4834 (1992):

1. Deprotonierung des Imidazol-N-H mit LiH in DMAc
2a. Reaktion des deprotonierten Polymers mit Propansulton zum Polybenzimidazol-N-Propansulfonat

2b Reaktion des deprotonierten Polymers mit Na-4-(bromo methyl)benzolsulfonat zum Polybenzimidazol-N-Benzylsulfonat.

In einem Patent ist ein weiterer Weg zum Erhalt von sulfonierten Polybenzimidazolen beschrieben (Sansone, M. J.; Gupta, B.; Forbes, C. E.; Kwiatek, M. S.: Sulfalkylation of Hydroxyethylated Polybenzimidazole Polymers US 4,997,892) der folgende Reaktionsfolge beinhaltet:

1. Reaktion von Polybenzimidazol an der N-H-Gruppe des Imidazolrings mit Ethylencarbonat in einem dipolar-aprotischen Lösungsmittel wie N-Methylpyrrolidinon zum hydroxyethylierten Polybenzimidazol $N\text{-}(CH_2)_2OH$
2. Deprotonierung der OH-Gruppe des hydroxyethylierten Polybenzimidazols mit einer geeigneten Base zum hydroxyethylierten Polybenzimidazol-Anion $N\text{-}(CH_2)_2O^-$
3. Reaktion des hydroxyethylierten Polybenzimidazol-Anions $N\text{-}(CH_2)_2O^-$ mit einem Sulton, z. B. Propansulton, zum sulfoalkylierten Polymer $N\text{-}(CH_2)_2O(CH_2)_3\text{-}SO_3^-$.

Es hat sich gezeigt, daß die exzellente thermische Stabilität von Polybenzimidazolen mit diesen Sulfonierungsmethoden zum Teil erhalten bleibt (siehe Gieselman et al.). Für manche Anwendungen der erwähnten sulfonierten Polybenzimidazole, wie zum Beispiel für ihren Einsatz in Membranbrennstoffzellen kann es jedoch von Nachteil sein, daß sie $-CH_2$-Gruppen aufweisen, die zu einer schlechteren Oxidationsstabilität als bei rein aromatischen sulfonierten Polymeren führen. Außerdem können die sulfonierten Polybenzimidazole in der protonierten Form innere Salze bilden, die die Protonenleitfähigkeit gemäß dem folgenden Reaktionsschema

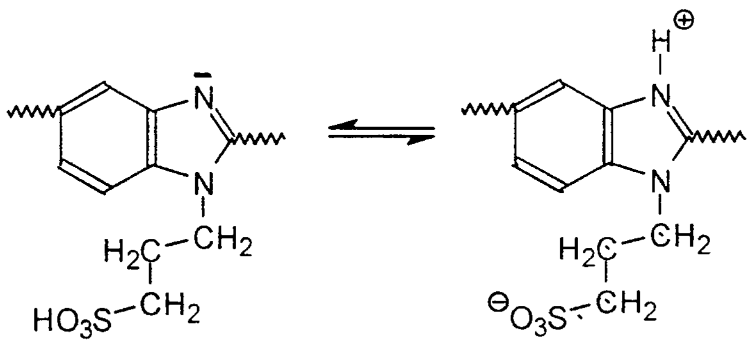

herabsetzen. Desweiteren können die sulfonierten Polybenzimidazole durch Störung der Kettenkonformation durch den Substituenten einen Teil ihrer mechanischen Stabilität verlieren.

Polybenzimidazol kann mittels folgender Methode unter Erhalt eines gegebenenfalls wasserlöslichen Anionenaustauscherpolymers an beiden Imidazol-N alkyliert werden (Hu, Ming; Pearce, Eli. M.; Kwei, T.K.: Modification of Polybenzimidazole: Synthesis and thermal stability of Poly ($N_1$-methylbenzimidazol) und Poly ($N_1$, $N_3$ - Dimethylbenzimidazol) Salt Journal of Polymer Science: Part A: Polymer Chemistry, 31, 553-561, 1993):

1. Deprotonierung des Imidazol-N-H mittels LiH zum N-Li-Salz in DMAc oder NMP
2. Alkylierung des Li-Salzes ≈N-Li mit Methyljodid zu $\approx N\text{-}CH_3$
3. Reaktion des methylierten Polybenzimidazols mit einem Überschuß an Methyljodid bei 80°C unter Erhalt von Poly-(N1,N3-Dimethylbenzimidazolium)-Dijodid.

Der Nachteil dieses Poly-($N_1$,$N_3$-Dimethylbenzimidazolium)-Jodids ist seine schlechte thermische Stabilität (Thermogravimetrie: Beginn Gewichtsverlust bei 180°C (Aufheizgeschwindigkeit 10°/min)). Dieser Gewichtsverlust kann mit der Abspaltung von Methyljodid unter Bildung des monomethylierten Polybenzimidazols und damit Verlust der Anionenaustauschereigenschaften des Polymers erklärt werden.

In der Patentliteratur findet sich eine Arbeit, bei der Blends/Mischungen aus niedermolekularen nichtwässrigen Amphoteren und hochmolekularen Säuren (Protonendonatoren) bzw. hochmolekularen Amphoteren und niedermolekularen Säuren beansprucht werden (Kreuer, K. D.; Fuchs, A.; Maier, J.; Frank, G.; Soczka-Guth, Th.; Clauß, J.: Protonenleiter mit einer Temperaturbeständigkeit in einem weiten Bereich und guten Protonenleitfähigkeiten, DE 196 32 285 A1). Dabei sind die Amphotere heterocyclische und heteroaromatische N-haltige Verbindungen, darunter u. a. auch Imidazol bzw. Benzimidazol oder Imidazol bzw. Benzimidazol enthaltende organische niedermolekulare, oligomere oder hochmolekulare Verbindungen, die als Protonensolvens wirken, wobei die im System vorhandenen Säuren die Protonendonatoren für die Amphotere sind. "Protonensolvens" bedeutet, daß die Protonen über die Amphoteren-Moleküle oder -Gruppen geleitet werden.

In DE 196 32 285 A1 werden als Anwendungsbeispiele nur die Herstellung und Charakterisierung von Blends aus sulfonierten Polyetherketonen und Imidazol bzw. Pyrazol präsentiert, wobei die Blends mit 10 Imidazol- bzw. Pyrazolmolekülen die besten Protonenleitfähigkeiten zeigen. Die gute Protonenleitfähigkeit dieser Blends ist vermutlich darauf zurückzuführen, daß die Imidazol- bzw. Pyrazolmoleküle in der Polymermatrix hochbeweglich sind. Diese hohe Beweglichkeit der niedermolekularen Heterocyclen birgt die Gefahr, daß diese u. U. wieder aus der sauren Polymermatrix ausgetragen werden können, insbesondere wenn sie im molaren Überschuß gegenüber den Säuregruppierungen vorliegen, und insbesondere bei Temperaturen von größer 200-250°C (Siedetemperatur Imidazol: 256°C; Siedetempteratur Pyrazol: 186°C). Beispiele der Protonenleitfähigkeiten von Blends aus hochmolekularen polymeren Säuren und hochmolekularen Imidazol- oder Pyrazolgruppen enthaltenden Polymeren werden in DE 196 32 285 A1 nicht gegeben. Die wasserfreie Protonenleitfähigkeit von Blends aus Polybenzimidazolen und polymeren Sulfonsäuren (für eine wasserfreie Protonenleitung muß die Imidazolkomponente im molaren Überschuß vorliegen), dürfte, falls überhaupt existent, sehr gering sein, da die Beweglichkeit von Polybenzimidazolen, insbesondere wenn sich die Imidazolgruppen in der Polymerhauptkette befinden, viel geringer ist als die Beweglichkeit von Imidazol bzw. Pyrazol.

Alle sulfonierten Arylpolymere zeigen eine große Sprödigkeit bei Austrocknung, welche bei ihrem Einsatz in der Brennstoffzelle beispielsweise bei Lastwechselvorgängen auftreten kann. Außerdem ist die thermische Stabilität der sulfonierten Arylpolymere immer noch verbesserungswürdig. Zusammenfassend kann also gesagt werden, daß die Verringerung der Sprödigkeit und die weitere Erhöhung der thermischen Stabilität der sulfonierten Arylpolymerlonomermembranen ein vorrangiges Ziel bei ihrer Weiterentwicklung für den Dauerbetrieb in PEM-Brennstoffzellen, PEM-Elektrolyse und anderen (Elektro)membranprozessen, bei denen die Membranen großen Belastungen ausgesetzt sind, sein muß.

Mit Hilfe der vorliegenden Erfindung werden Säure-Base-Polymerblends oder Säure-Base-Polymerblendmembranen hergestellt, die sich durch exzellente chemische, mechanische und thermische Stabilitäten auszeichnen. So betrifft die vorliegende Erfindung insbesondere

Verfahren zur Herstellung von Säure-Base-Polymerblends oder Säure-Base-Polymerblendmembranen, dadurch gekennzeichnet, daß man Lösungen von polymeren Sulfonsäuren oder Sulfonsäuresalzen, polymeren Phosphonsäuren oder Phosphonsäuresalzen und/oder polymeren Carbonsäuren oder Carbonsäuresalzen und einem basischen Imidazol, Benzimidazol- und/oder andere heterocyclische, insbesondere heteroaromatische Stickstoff-haltige basische Baugruppen wie Oxazol-, Isooxazol-, Carbazol-, Indol-, Isoindol-, Thiazol-, Isothiazol-, Benzoxazol-, Benzthiazol-, Imidazolidln-, Indazol-, 1,2,3-Oxadiazol-, 1,2,3-Thiadiazol-, 1,2,4-Thiadiazol-, 1,2,3-Triazol-, Benzotriazol-, 1,2,4-Triazol-, Tetrazol-, Pyrrol-, Pyrrolidin-, Pyrrazolgruppen enthaltenden Polymer ggf. unter Addition von LiCl in dipolar-aprotischen Lösungsmitteln umsetzt und aus den Lösungen das Lösungsmittel verdampft, wobei man die $SO_3H$-, $PO_3H_2$- oder COOH-Form der Blends durch Nachbehandlung des Blendpolymers oder der Blendpolymermembran in verdünnten Mineralsäuren bei Temperaturen von 20 bis 80 °C herstellt.

Des weiteren betrifft die Erfindung Säure-Base-Polymerblends oder Säure-Base-Polymerblendmembranen, die nach dem erfindungsgemäßen Verfahren erhältlich sind.

Vorzugsweise werden als polymere Sulfonsäuren-, Phosphonsäuren- und/oder Carbonsäuren oder Salze Polymere eingesetzt, die ausgewählt sind aus Polyetheretherketonen, Polyethersulfonen, Polyphenylsulfonen, Polyphenylensulfiden und/oder Polyphenylenoxiden.

Vorzugsweise setzt man polymere Sulfonsäure-, Phosphonsäure- und/oder Carbonsäuresalze ein ausgewählt aus Polymeren die als Repitiereinheit aromatische Kern-Stukturen der Formeln $R_1$ oder $R_2$ aufweisen, wobei

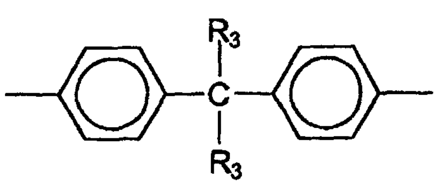

($R_1$)

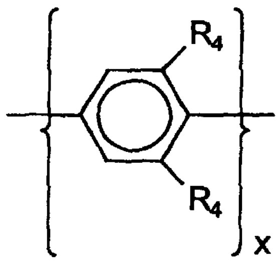

(R₂)

wobei

$R_3$ für Wasserstoff, Trifluormethyl oder $C_nH_{2n+1}$, mit n = 1 bis 10, insbesondere Methyl
$R_4$ für Wasserstoff, $C_nH_{2n+1}$ mit n = 1 bis 10, insbesondere Methyl oder Phenyl und
x für 1, 2 oder 3 steht,

die über Brückengruppen $R_5$, $R_6$, $R_7$ oder $R_8$ verknüpft sind, wobei

$R_5$ für -O- und

$R_6$ für $-SO_2-$,

$R_7$ für

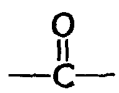

und

$R_8$ für -S- stehen

insbesondere,
Poly(etheretherketone) mit ($[R_5\text{-}R_2\text{-}R_5\text{-}R_2\text{-}R_7]_n$; x = 1, $R_4$=H)
Poly(ethersulfone) ($[R_1\text{-}R_5\text{-}R_2\text{-}R_6\text{-}R_2\text{-}R_5]_n$; $R_2$: x=1, $R_4$=H),
Poly(ethersulfone) ($[R_2\text{-}R_6\text{-}R_2\text{-}R_5]_n$; $R_2$: x=1, $R_4$=H),
Poly(phenylsulfone) ($[(R_2)_2\text{-}R_5\text{-}R_2\text{-}R_6\text{-}R_2]_n$; $R_2$: x=2, $R_4$=H),
Polyetherethersulfone ($[R_5\text{-}R_2\text{-}R_5\text{-}R_2\text{-}R_6]_n\text{-}[R_5\text{-}R_2\text{-}R_6\text{-}R_2]_m$; $R_2$: x=1, $R_4$=H, $\frac{n}{m}$ =0,18),
Poly(phenylensulfide) ($[R_2\text{-}R_8]_n$; $R_2$: x=1, $R_4$=H) und/oder
Poly(phenylenoxide) ($[R_2\text{-}R_5]_n$; $R_4$=$CH_3$) mit den Imidazolgruppen oder Benzimidazolgruppen enthaltenden Polymeren umsetzt.

Vorzugsweise löst man bei dem erfindungsgemäßen Verfahren eine polymere Sulfonsäure, Phosphonsäure und/oder Carbonsäure zuerst in einem dipolar-aprotischen Lösungsmittel auf, fügt der Lösung eine dem Gehalt an Säuregruppen äquivalente Menge eines primären, sekundären oder tertiären Amins zu, setzt danach ein festes oder in einem dipolar-aprotischen Lösungsmittel gelöstes basisches Polymer zu , das Imidazolgruppen oder Benzimidazolgruppen und/oder heterocyclische, insbesondere heteroaromatische Stickstoff-haltige basische Baugruppen aufweist, und löst dieses Polymer auch in der Lösung auf

Ein besonderes erfindungsgemäßes Verfahren zeichnet sich dadurch aus, daß man der Lösung aus polymerer Sulfonsäure oder polymerem Sulfonsäuresalz, polymerer Phosphonsäure oder polymerem Phosphonsäuresalz, polymerer Carbonsäure oder polymerem Carbonsäuresalz und Imidazolgruppen oder Benzimidazolgruppen und/oder andere heterocyclische, insbesondere heteroaromatische Stickstoff-haltige basische Baugruppen enthaltendem basischem Polymer gemäß Anspruch 1 ein weiteres Polymer zusetzt, welches primäre, sekundäre oder tertiäre basische Stickstoffgruppen aufweist und dieses Polymer in der Lösung auflöst.

Die erfindungsgemäßen Polymerblends können in Form dünner Folien (Membranen) als protonenleitender Elektrolyt in Membranbrennstoffzellen ($H_2$-Polymerelektrolytbrennstoffzellen oder Direktmethanolbrennstoffzellen), in der Polymerelektrolytmembran(PEM)-Elektrolyse, in der wässrigen oder nichtwässrigen Elektrodialyse oder in der Diffusionsdialyse eingesetzt werden.

Des weiteren können die erfindungsgemäßen Polymerblends in Form dünner Folien (Membranen) oder in Form von Hohlfasern in der Pervaporation, Perstraktion, Gastrennung, Dialyse, Ultrafiltration, Nanofiltration oder Umkehrosmose verwendet werden.

Bevorzugte Säure-Base-Polymerblends oder Säure-Base-Polymerblendmembranen, sind zusammengesetzt aus:

(1) einem Kationenaustauscherpolymer gegebenenfalls mit Aryl- und/oder Hetarylpolymerhauptkette mit $SO_3X$-Gruppierungen (X=beliebiges Kation einschließlich Wasserstoff) und

(2) Benzimidazol, Imidazol und/oder andere heterocyclische, insbesondere heteroaromatische Stickstoff-haltige basische Bauguppen, insbesondere Oxazol-, Isooxazol-, Carbazol-, Indol-, Isoindol-, Thiazol-, Isothiazol-, Benzoxazol-, Benzthiazol-, Imidazolidin-, Indazol-, 1,2,3-Oxadiazol-, 1,2,3-Thiadiazol-, 1,2,4-Thiadiazol-, 1,2,3-Triazol-, Benzotriazol-, 1,2,4-Triazol-, Tetrazol-, Pyrrol-, Pyrrolidin-, Pyrrazolgruppen enthaltenden Polymeren und gegebenenfalls (bei ternären lonomerblendmembranen) außerdem:

(3) anderen primären, sekundären oder tertiären basischen Stickstoff enthaltenden Polymeren wie Poly(4-vinylpyridin), Poly(2-vinylpyridin), Poly(4-vinylpyridin) oder Poly(2-vinylpyridin) enthaltenden (Block)copolymeren, Poly (sulfon-ortho-sulfon-diamin), Poly(sulfon-ortho-ether-diamin), Poly(anilin), Poly(ethylenimin).

Erfindungsgemäß sind also folgende Kombinationen:

Binäre Blends: 1a-2 oder 1b-2
Ternäre Blends: 1a-2-3 oder 1b-2-3

Es wurde nun überraschend festgestellt, daß bei der Mischung eines polymeren Sulfonsäuresalzes, beispielsweise Poly(ethersulfon-Lithiumsulfonat) der nachfolgenden Formel

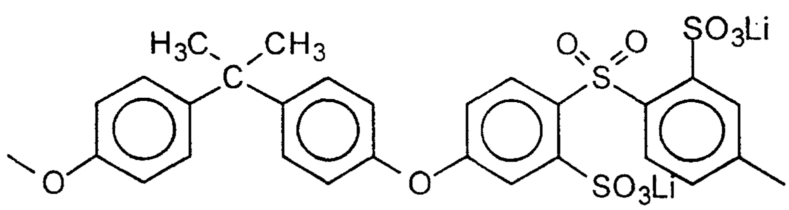

mit einer Sulfonatgruppen pro Wiederholungseinheit erhältlich nach Kerres, J.; Cui, W.; Reichte, S.: New sulfonated engineering polymers via the metalation route. I. Sulfonated poly(ethersulfone) PSU Udel® via metalation-sulfinationoxidation Journal of Polymer Science, Part A: Polymer Chemistry 34, 2421-2438 (1996) oder Poly(etheretherketon-Lithiumsulfonat) der nachfolgenden Formel

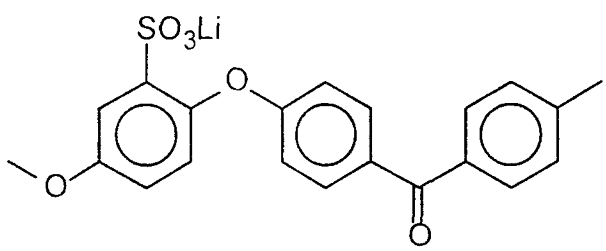

mit einer Sulfonatgruppe pro Wiederholungseinheit erhältlich nach Helmer-Metzmann et al. mit nur 3-25 Gewichtsprozent eines Polybenzimidazols PBI, Celazol®, eine ionenleitende Polymerblendmembran erhalten wird, die sich durch folgende Eigenschaften auszeichnet:

- eine starke Verbesserung der mechanischen Festigkeit gegenüber der jeweiligen reinen polymeren Sulfonsäure (dem jeweiligen polymeren Sulfonsäuresalz);

- wasserlösliche polymere Sulfonsäuresalze verlieren überraschenderweise nach dem Zusammenmischen mit PBI ihre Wasserlöslichkeit aufgrund der Wechselwirkungen der Polymerketten der Blendkomponenten (Bildung von Wasserstoffbrücken-Bindungen).

- die Blends der polymeren Sulfonsäuren mit PBI weisen eine hohe thermische Stabilität bereits bei überraschend geringen Gehalten von PBI im Blend (3-10%) auf, verursacht durch Protonenübertragung von der Sulfonsäure auf den basischen Polybenzimidazol-Stickstoff unter Polysalzbildung und durch die hohe thermische Stabilität des PBI.

Werden die Blends aus Sulfonsäuresalz und PBI in verdünnter Mineralsäure (z. B. 10% HCl oder 10% $H_2SO_4$) nachbehandelt, so entstehen durch Protonenübertragung auf den basischen Imidazol-N ionische Vernetzungsbrücken zwischen der sauren und der basischen Blendkomponente gemäß dem nachfolgenden Reaktionsschema

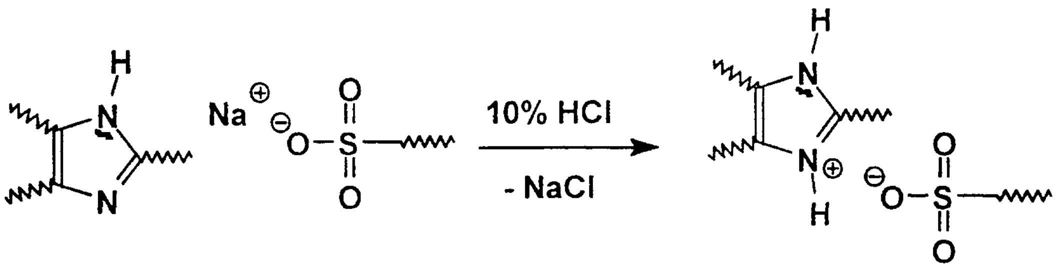


Diese ionischen Vernetzungsbrücken sind für die hohe thermische und mechanische Stabilität der erfindungsgemäßen Säure-Base-Blends verantwortlich.

Die wesentlichen Unterschiede der in der vorliegenden Erfindung beanspruchten Blends gegenüber der DE 196 32 285 sind:

- die erfindungsgemäßen Blends werden ausschließlich in wässrigem Medium eingesetzt, d. h. hier ist Wasser der Ampholyt (siehe die Anwendungsbeispiele, bei der die Protonenleitfähigkeit bzw. der Protonenwiderstand in 0,5-molarer wässriger HCl gemessen wurde).
- bei den erfindungsgemäßen Säure-Base-Blends fungiert das Imidazol, Benzimidazol oder andere basische N-haltige heterocyclische, insbesondere heteroaromatische Gruppen enthaltende Polymer ausschließlich als Base, d. h. es bildet durch Protonenübertragung von der Säurekomponente ionische Bindungen zu dieser aus. Wie IR-spektroskopische Messungen ergeben haben, dissoziiert das Proton vom Imidazolium-Kation in wässrigem Medium nicht mehr ab, da die Imidazolgruppierung eine starke Base ist ($p_k^b$ etwa 9-10).
- bei den erfindungsgemäßen Säure-Base-Blends läuft die Protonenleitung ausschließlich über die Sulfonsäuregruppen der sauren Blendkomponente. Aus diesem Grunde werden in der vorliegenden Erfindung Säure-Base-Blends bevorzugt, die die saure Komponente im molaren Überschuß enthalten.
- Binäre Anionenaustauscher-Blends aus Imidazol enthaltenden Polymeren und aus Anionenaustauscherpolymeren und ternäre Blends werden in DE 196 32 285 A1 nicht offenbart. Insbesondere die Blends aus Imidazol enthaltenden Polymeren, polymeren Säuren und einem weiteren basischen Polymer sind sehr vielversprechend, da bei diesen Blends die mechanische und thermische Stabilität noch weiter verbessert werden kann.

Bei der Herstellung von ternären Ionomerblendmembranen aus:

- sulfoniertem PEEK/PSU
- Polybenzimidazol
- aminiertem PSU

wurde überraschenderweise festgestellt, daß diese Blends ebenfalls eine sehr gute mechanische Stabilität und eine hohe thermische Beständigkeit aufweisen.

Beispiel 1:

Herstellung von Säure-Base-Blends aus sulfoniertem PEEK und PBI

10,067 g einer 20,16%igen Lösung von sulfoniertem Poly(etheretherketon) (Ionenaustauscherkapazität 1,8

meq $SO_3H$/g Polymer) und 26,8 g einer 1,875%igen Lösung von Polybenzimidazol CELAZOL® (Poly[2,2'-(m-phenylen)-5,5'-bibenzimidazol] wurden in N-Methylpyrrolidon gemischt. Mit dieser Lösung wurde auf einer Glasplatte ein ca. 300 µm dicker Film ausgerakelt. Das Lösungsmittel wurde bei einer Temperatur von 120-140°C abgedampft. Die Glasplatte mit dem dünnen Polymerfilm wurde in eine Wanne mit vollentsalztem Wasser gelegt. Dabei löst sich der Film von der Glasplatte. Die Membran wurde bei Temperaturen von 60-80°C zuerst 24 h in 8%iger HCl und dann 24 h bei Temperaturen von 20-80°C in vollentsalztem Wasser nachbehandelt.

| Charakterisierungsergebnisse: | |
|---|---|
| Ionenaustauscherkapazität | 1,06 meq $SO_3H$/g Polymer |
| Dicke | 20 µm |
| Quellung ($H_2O$, RT, $H^+$-Form) | 22,8% |
| Flächenwiderstand (RT, $H^+$-Form) | 0,116 $\Omega cm^2$ (gemessen in 0,5 N HCl) |
| spezif. Widerstand (RT, $H^+$-Form) | 58,125 $\Omega$cm |
| thermische Stabilität (aus DSC, TGA) | Beginn Zersetzung: ≈350°C (Bedingungen: Luft, Aufheizrate 20°C/min) |

Beispiel 2:

Herstellung von Säure-Base-Blends aus sulfoniertem PSU und PBI

Das PBI und das sulfonierte PSU Udel in der $SO_3Li$-Form wurden zu einer homogenen Lösung vereinigt (Daten sh. Tab. 1). Mit dieser Lösung wurde auf einer Glasplatte ein ca.300 µm dicker Film ausgerakelt. Das Lösungsmittel wurde bei einer Temperatur von 120-140°C abgedampft. Die Glasplatte mit dem dünnen Polymerfilm wurde in eine Wanne mit vollentsalztem Wasser gelegt. Dabei löste sich der Film von der Glasplatte. Die Membran wurde bei Temperaturen von 60-80°C zuerst 24 h in 8%iger HCl und dann 24 h bei Temperaturen von 20-80°C in vollentsalztem Wasser nachbehandelt.

Tab. 1:

| Daten der Herstellung und Charakterisierung von Blendmembranen aus sulfoniertem PSU und dem Polybenzimidazol PBI Poly[2,2'-(m-phenylen)-5,5'-bibenzimidazol] | | | | | | | |
|---|---|---|---|---|---|---|---|
| Membran | Menge PBI | Menge PSU | PBI-Gehalt Membran | Kapazität | Quellung | $R_a^{H+}$ | $R_{sp}^{H+}$ |
| [Nr] | [g] | [g] | [Gew%] | $\frac{meq\ SO_3H}{g\ Polymer}$ | [%] | [$\Omega cm^2$] | [$\Omega$cm] |
| 58* | 0,25¥ | 2,7 | 8,5 | 2,087 | 118 | 0,107 | 6,56 |
| 60* | 0,357**** | 1,428 | 20 | 1,068 | 30,8 | 0,178 | 46,78 |
| 61* | 0.357† | 2,023 | 15 | 1,457 | 43,26 | 0,074 | 16,5 |
| 62* | 0,357_ | 3,213 | 10 | 1,842 | 107,5 | 0,061 | 6,65 |
| 68* | 0,357 | 1,071 | 25 | 0,83 | 17,26 | 0,497 | 292,35 |
| | | | | | | | |
| 57** | 0,25 | 2,25*** | 10 | 0,46 | 8,75 | 0,718 | 194.05 |
| 69** | 0,357# | 7,14 | 5 | 1,12 | 14,56 | 0,119 | 51.85 |

¥ in 13,75 g NMP gelöst
* mit wasserlöslichem PSU, Kapazität 2,5 meq $SO_3H$/g
** mit wasserunlöslichem PSU, Kapazität 1,6 meq/g
*** als 15 Gew%ige Lösung in NMP
**** als 1,785 Gew%ige Lösung
† als 1,785 Gew%ige Lösung, zusätzliche Addition von 6,557 g NMP
_ als 1,785 Gew%ige Lösung, zusätzliche Addition von 19,647 g NMP
# als 1,785 Gew%ige Lösung, zusätzliche Addition von 50 g NMP

Beispiel 3:

Herstellung eines ternären Säure-Base-Blends aus sulfoniertem PEEK, PBI und aminiertem PSU

22,5 g einer 20 Gew%igen Lösung von sulfoniertem Poly(etheretherketon) (Ionenaustauscherkapazität 1,9 meq $SO_3H$/g Polymer) wurden in DMAc mit 10 g einer 6,4 Gew%igen Lösung von Polybenzimidazol PBI CELAZOL® (Poly[2,2'-(mphenylen)-5,5'-bibenzimidazol] in DMAc (PBI-Lösung mit Zusatz von LiCl) gemischt. Danach wurde der Polymerlösung noch 10 g einer 15 Gew%igen Lösung von Poly(sulfon-ortho-sulfon-diamin) in NMP hinzugefügt und bis zur Homogenisierung gerührt. Mit dieser Lösung wurde auf einer Glasplatte ein ca.400 µm dicker Film ausgerakelt. Das Lösungsmittel wurde bei einer Temperatur von 120-140°C abgedampft. Die Glasplatte mit dem dünnen Polymerfilm wurde in eine Wanne mit vollentsalztem Wasser gelegt. Dabei löste sich der Film von der Glasplatte. Die Membran wurde bei Temperaturen von 60-80°C zuerst 24 h in 8%iger HCl und dann 24 h bei Temperaturen von 20-80°C in vollentsalztem Wasser nachbehandelt.

| Charakterisierungsergebnisse: | |
|---|---|
| Ionenaustauscherkapazität | 0,93 meq $SO_3H$/g Polymer |
| Dicke | 54 µm |
| Quellung ($H_2O$, RT, $H^+$-Form) | 25,6% |
| Flächenwiderstand (RT, $H^+$-Form) | 0,62 $\Omega cm^2$ (gemessen in 0,5 N HCl) |
| spezif. Widerstand (RT, $H^+$-Form) | 114,82 $\Omega$cm |
| thermische Stabilität (aus DSC, TGA) | Beginn Zersetzung ≈300°C (Bedingungen: Luft, Aufheizrate 5°C/min) |

## Patentansprüche

1. Verfahren zur Herstellung von Säure-Base-Polymerblends oder Säure-Base-Polymerblendmembranen, **dadurch gekennzeichnet, daß** man Lösungen von polymeren Sulfonsäuren oder Sulfonsäuresalzen, polymeren Phosphonsäuren oder Phosphonsäuresalzen und/oder polymeren Carbonsäuren oder Carbonsäuresalzen und einem basischen Imidazol, Benzimidazol- und/oder andere heterocyclische, insbesondere heteroaromatische Stickstoffhaltige basische Baugruppen wie Oxazol-, Isooxazol-, Carbazol-, Indol-, Isoindol-, Thiazol-, Isothiazol-, Benzoxazol-, Benzthiazol-, Imidazolidin-, Indazol-, 1,2,3-Oxadiazol-, 1,2,3-Thiadiazol-, 1,2,4-Thiadiazol-, 1,2,3-Triazol-, Benzotriazol-,- 1,2,4-Triazol-, Tetrazol-, Pyrrol-, Pyrrolidin-, Pyrrazolgruppen enthaltenden Polymer ggf. unter Addition von LiCl in dipolar-aprotischen Lösungsmitteln umsetzt und aus den Lösungen das Lösungsmittel verdampft, wobei man die $SO_3H$-, $PO_3H_2$- oder COOH-Form der Blends durch Nachbehandlung des Blendpolymers oder der Blendpolymermembran in verdünnten Mineralsäuren bei Temperaturen von 20 bis 80 °C herstellt.

2. Verfahren nach Anspruch 1, **dadurch gekennzeichnet, daß** man die polymeren Sulfonsäuren-, Phosphonsäuren- und/oder Carbonsäuren oder Salze die ausgewählt sind aus Polyetheretherketonen, Polyethersulfonen, Polyphenylsulfonen, Polyphenylensulfiden und/oder Polyphenylenoxiden.

3. Verfahren nach Anspruch 1, **dadurch gekennzeichnet, daß** man polymere Sulfonsäure-, Phosphonsäure- und/oder Carbonsäuresalze ausgewählt aus Polymeren die als Repitiereinheit aromatische Kern-Stukturen der Formeln $R_1$ oder $R_2$ aufweisen, wobei

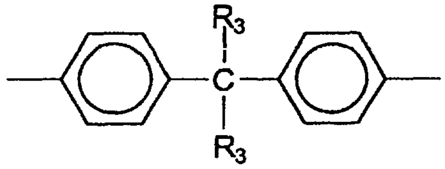

($R_1$)

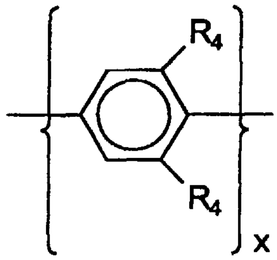

(R2)

wobei

$R_3$ für Wasserstoff, Trifluormethyl oder $C_nH_{2n+1}$, mit n = 1 bis 10, insbesondere Methyl
$R_4$ für Wasserstoff, $C_nH_{2n+1}$ mit n = 1 bis 10, insbesondere Methyl oder Phenyl und
x für 1, 2 oder 3 steht,

die über Brückengruppen $R_5$, $R_6$, $R_7$ oder $R_8$ verknüpft sind, wobei

$R_5$ für -O- und

$R_6$ für $-SO_2-$,

$R_7$ für

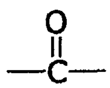

und

$R_8$ für -S- stehen

insbesondere,
Poly(etheretherketone) mit ($[R_5-R_2-R_5-R_2-R_7]_n$; x = 1, $R_4$=H)
Poly(ethersulfone) ($[R_1-R_5-R_2-R_6-R_2-R_5]_n$; $R_2$: x=1, $R_4$=H),
Poly(ethersulfone) ($[R_2-R_6-R_2-R_5]_n$; $R_2$: x=1, $R_4$=H),
Poly(phenylsulfone) ($[(R_2)_2-R_5-R_2-R_6-R_2]_n$; $R_2$: x=2, $R_4$=H),
Polyetherethersulfone ($[R_5-R_2-R_5-R_2-R_6]_n-[R_5-R_2-R_6-R_2]_m$; $R_2$: x=1, $R_4$=H, $\frac{n}{m}$ =0,18),
Poly(phenylensulfide) ($[R_2-R_8]_n$; $R_2$: x=1, $R_4$=H) und/oder
Poly(phenylenoxide) ($[R_2-R_5]_n$; $R_4=CH_3$) mit den Imidazolgruppen oder Benzimidazolgruppen enthaltenden Polymeren umsetzt.

4. Verfahren nach den Ansprüchen 1 bis 3, **dadurch gekennzeichnet, daß** man zuerst eine polymere Sulfonsäure, Phosphonsäure und/oder Carbonsäure in einem dipolar-aprotischen Lösungsmittel auflöst, eine dem Gehalt an Säuregruppen äquivalente Menge eines primären, sekundären oder tertiären Amins zufügt, der Lösung danach ein festes oder in einem dipolar-aprotischen Lösungsmittel gelöstes basisches Polymer zusetzt, das Imidazolgruppen oder Benzimidazolgruppen und/oder heterocyclische, insbesondere heteroaromatische Stickstoff-haltige basische Baugruppen gemäß Anspruch 1 aufweist, und dieses Polymer auch in der Lösung auflöst.

5. Verfahren nach den Ansprüchen 1 bis 4, **dadurch gekennzeichnet, daß** man der Lösung aus polymerer Sulfonsäure oder polymerem Sulfonsäuresalz, polymerer Phosphonsäure oder polymerem Phosphonsäuresalz, polymerer Carbonsäure oder polymerem Carbonsäuresalz und Imidazolgruppen oder Benzimidazolgruppen und/oder andere heterocyclische, insbesondere heteroaromatische Stickstoff-haltige basische Baugruppen enthaltendem basischem Polymer gemäß Anspruch 1 ein weiteres Polymer zusetzt, welches primäre, sekundäre oder tertiäre basische Stickstoffgruppen aufweist und dieses Polymer in der Lösung auflöst.

**6.** Säure-Base-Polymerblends oder Säure-Base-Polymerblendmembranen, erhältlich nach einem Verfahren nach den Ansprüchen 1-5.

**7.** Verfahren nach einem der Ansprüche 1 bis 5 , **dadurch gekennzeichnet, daß** man als Benzimidazolgruppen enthaltendes basisches Polymer Poly[(2,2'-m-phenylen)-5,5'-bibenzimidazol] einsetzt.

**8.** Verwendung von Polymerblends nach Anspruch 6 in Form dünner Folien (Membranen) als protonenleitender Elektrolyt in Membranbrennstoffzellen ($H_2$-Polymerelektrolytbrennstoffzellen oder Direktmethanolbrennstoffzellen), in der Polymerelektrolytmembran(PEM)-Elektrolyse, in der wässrigen oder nichtwässrigen Elektrodialyse oder in der Diffusionsdialyse.

**9.** Verwendung von Polymerblends nach Anspruch 6 in Form dünner Folien (Membranen) oder in Form von Hohlfasern in der Pervaporation, Perstraktion, Gastrennung, Dialyse, Ultrafiltration, Nanofiltration oder Umkehrosmose.

## Claims

**1.** Procedure for the manufacture of acid-base-polymer blends or acid-base-polymer-blend membranes, **characterised in that** solutions of polymeric sulphonic acids or sulphonic acid salts, polymeric phosphonic acids or phosphonic acid salts and / or polymeric carboxylic acids or carboxylic acid salts are reacted with a basic polymer containing imidazole, benzimidazole- and / or other heterocyclic, particularly heteroaromatic nitrogen-containing basic groups such as oxazole-, iso-oxazole-, carbazole-. indole-, iso-indole-, thiazole-, isothiazole-, benzoxazole-, benzothiazole-, imidazolidine-, indazole-, 1,2,3-oxadiazole-, 1,2,3-thiadiazole-, 1,2,4-thiadiazole-, 1,2,3-triazole-, benzotriazole-. 1,2,4-triazole-, tetrazole-, pyrrole-, pyrrolidine-, pyrrazole groups optionally with the addition of LiCl in dipolar-aprotic solvents after which the solvent is steam-distilled whereby the $SO_3H$-, $PO_3H_2$ - or COOH- form of the blends is manufactured by subsequent treatment of the blend polymer or the blend polymer membrane with dilute mineral acids at temperatures of between 20 and 80 °C.

**2.** Procedure in accordance with claim 1, **characterised in that** the polymeric sulphonic acids-, phosphonic acids- and / or carboxylic acids or salts which are selected consist of polyetheretherketones, polyethersulphones, polyphenylsulphones, polyphenylene sulphides and / or polyphenylene oxides.

**3.** Procedure in accordance with claim 1, **characterised in that** polymeric sulphonic acid-, phosphonic acid- and / or carboxylic-acid salts are selected from polymers having aromatic core structures of formulae $R_1$ or $R_2$ as repeating units, where

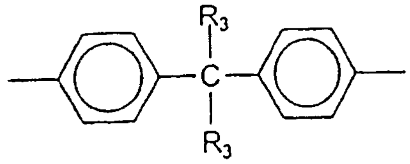

($R_1$)

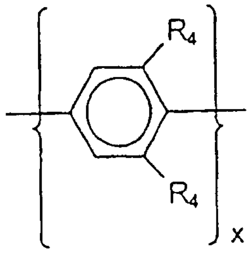

($R_2$)

$R_3$ stands for hydrogen, trifluoromethyl or $C_nH_{2n+1}$, where n = 1 to 10 - and in particular-methyl
$R_4$ stands for hydrogen, $C_nH_{2n+1}$ where n = 1 to 10 - and in particular, methyl or phenyl and
x stands for 1, 2 or 3,

which are coupled together by bridging units $R_5$, $R_6$, $R_7$, or $R_8$, where

$R_5$ stands for -O- and
$R_6$ stands for $-SO_2-$
$R_7$ stands for

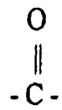

and
$R_8$ for -S-

and in particular

| | |
|---|---|
| Poly(etheretherketone) | with $([R_5\text{-}R_2\text{-}R_5\text{-}R_2\text{-}R_7]_n$; x = 1, $R_4$ = H) |
| Poly(ethersulphone) | $([R_1\text{-}R_5\text{-}R_2\text{-}R_6\text{-}R_2\text{-}R_5]_n$; $R_2$: x = 1, $R_4$ = H), |
| Poly(ethersulphone) | $([R_2\text{-}R_6\text{-}R_2\text{-}R_5]_n$; $R_2$: x = 1, $R_4$ = H) |
| Poly(phenylsulphone) | $([(R_2)_2\text{-}R_5\text{-}R_2\text{-}R_6\text{-}R_2]_n$; $R_2$: x = 2, $R_4$ = H), |
| Polyetherethersulphone | $([R_5\text{-}R_2\text{-}R_5\text{-}R_2\text{-}R_6]_n$ -$[R_5\text{-}R_2\text{-}R_6\text{-}R_2]_m$; $R_2$: x =1, $R_4$ = H, n/m = 0.18) |
| Poly(phenylenesulphide) | $([R_2\text{-}R_6]$n; $R_2$: x = 1, $R_4$ = H) and / or |
| Poly(phenyleneoxide) | $([R_2\text{-}R_5]_n$; $R_4 = CH_3$) |

are reacted with the polymers containing imidazole groups or benzimidazole groups.

**4.** Procedure in accordance with claims 1 to 3, **characterised in that** first of all a polymeric sulphonic acid, phosphonic acid and / or a carboxylic acid is dissolved in a dipolar-aprotic solvent to which is added an equivalent quantity of a primary, secondary or tertiary amine, to this solution is then added a solid basic polymer or a solution of such a polymer in a dipolar-aprotic solvent, where the polymer has imidazole groups or benzimidazole groups and/or heterocyclic - in particular, hetero-aromatic nitrogen-containing basic groups - in accordance with claim 1 and this polymer is also dissolved in the solvent.

**5.** Procedure in accordance with claims 1 to 4, **characterised in that** a further polymer containing primary-, secondary- or tertiary basic nitrogen groups is added to and dissolved in the solution of polymeric sulphonic acid or polymeric sulphonic acid salt, polymeric phosphoric acid or polymeric phosphonic acid salt, polymeric carboxylic acid or polymeric carboxylic acid salt and the polymer containing imidazole groups or benzimidazole groups and/or other heterocyclic, in particular, hetero-aromatic basic nitrogen-containing groups according to claim 1.

**6.** Acid-base-polymer blends or acid-base-polymer membranes obtainable by a procedure in accordance with claims 1 - 5.

**7.** Procedure in accordance with one of claims 1 - 5, **characterised in that** poly [(2, 2'-m-phenylene)-5,5'-bibenzimidazole] is used as the basic polymer containing benzimidazole groups.

**8.** Use of polymerblends in accordance with claim 6 in the form of thin films (membranes) as a proton-conducting electrolyte in membrane fuel cells ($H_2$-polymer-electrolyte fuel cells or direct-methanol-fuel cells) in polymer-electrolyte-membrane(PEM)-electrolysis in aqueous or non-aqueous electrodialysis or in diffusion dialysis.

**9.** Use of polymer blends in accordance with claim 6 in the form of thin films (membranes) or in the form of hollow fibres in pervaporation, perstraction [I found these also in the US translation], gas separation, dialysis, ultrafiltration, nanofiltration or reverse osmosis.

## Revendications

1. Procédé pour la préparation de mélanges polymères d'acides - bases ou de membranes constituées par des mélanges polymères d'acides - bases, **caractérisé en ce qu'**on fait réagir des solutions d'acides sulfoniques ou de sels d'acides sulfoniques polymères, d'acides phosphoniques ou de sels d'acides phosphoniques polymères et/ou d'acides carboxyliques ou de sels d'acides carboxyliques polymères avec un polymère basique contenant des groupes imidazole, benzimidazole et/ou d'autres constituants basiques contenant des atomes d'azote hétérocycliques, en particulier hétér.oaromatiques, tel qu'un groupe oxazole, un groupe. isoxazole, un groupe carbazole, un groupe indole, un groupe isoindole, un groupe thiazole, un groupe isothiazole, un groupe benzoxazole, un groupe benzthiazole, un groupe imidazolidine, un groupe indazole, un groupe 1,2,3-oxadiazole, un groupe 1,2,3-thiadiazole, un groupe 1,2,4-thiadiazole, un groupe benzotriazole, un groupe 1,2,4-triazole, un groupe tétrazole, un groupe pyrrole, un groupe pyrrolidine, un groupe pyrazole, le cas échéant avec addition de chlorure de lithium, dans des solvants dipolaires - aprotiques et on évapore le solvant des solutions, la forme $SO_3H$, $PO_3H_2$ ou COOH du mélange étant préparée par traitement ultérieur du polymère sous forme de mélange ou de la membrane constituée d'un polymère sous forme de mélange dans des acides minéraux divisés à des températures de 20 à 80 °C.

2. Procédé selon la revendication 1, **caractérisé en ce qu'**on choisit les acides sulfoniques, les acides phosphoniques et/ou des acides carboxyliques polymères ou leurs sels polymères parmi le groupe comprenant des polyétheréthercétones, des polyéthersulfones, des polyphénylsulfones, des polyphénylènesulfures et/ou des oxydes de polyphénylène.

3. Procédé selon revendications 1, **caractérisé en ce qu'**on fait réagir des sels d'acides sulfoniques, d'acides phosphoniques et/ou d'acides carboxyliques polymères choisis parmi des polymères qui présentent, à titre d'unité de structure, des structures à noyau aromatique répondant aux formules $R_1$ ou $R_2$,

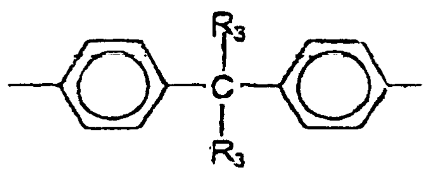

($R_1$)

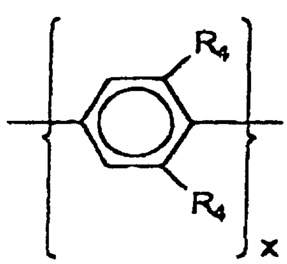

($R_2$)

dans lesquelles

- $R_3$ représente un atome d'hydrogène, un groupe trifluorométhyle ou un groupe $C_nH_{2n+1}$ où n = de 1 à 10, en particulier un groupe méthyle ;
- $R_4$ représente un atome d'hydrogène, un groupe trifluorométhyle ou un groupe $C_nH_{2n+1}$ où n = de 1 à 10, en particulier un groupe méthyle ou un groupe phényle ;
- x représente 1, 2 ou 3,

qui sont reliés via des groupes pontaux $R_5$, $R_6$, $R_7$ ou $R_8$ dans lesquels

- $R_5$ représente un atome d'oxygène ;

$R_6$ représente un groupe $SO_2$,
$R_7$ représente un groupe >C=O et
$R_8$ représente un atome de soufre,

en particulier
une polyétheréthercétone
avec ($[R_5-R_2-R_5-R_2-R_7]_n$ ; x = 1, $R_4$ = H),
une polyéthersulfone
($[R_1-R_5-R_2-R_6-R_2-R_5]_n$ ; $R_2$ ; x = 1, $R_4$ = H),
une polyéthersulfone
($[R_2-R_6-R_2-R_5]_n$ ; $R_2$ ; x = 1, $R_4$ = H),
une polyphénylsulfone
($[(R_2)_2-R_5-R_2-R_6-R_2]_n$ ; $R_2$ ; x = 2, $R_4$ = H),
une polyétheréthersulfone
($[R_5-R_2-R_5-R_2-R_6]_n-[R_5-R_2-R_6-R_2]_m$ ; $R_2$ ; x = 1, $R_4$ = H, n/m = 0,18),
un polyphénylènesulfure
($[R_2-R_8]_n$ ; $R_2$ ; x = 1, $R_4$ = H), et/ou
un oxyde de polyphénylène
($[R_2-R_5]_n$ ; $R_4$ = $CH_3$)
avec les polymères contenant des groupes imidazole ou des groupes benzimidazole.

4. Procédé selon les revendications 1 à 3, **caractérisé en ce qu'**on dissout d'abord un acide sulfonique, un acide phosphonique et/ou un acide carboxylique polymère dans un solvant dipolaire - aprotique, on ajoute une quantité d'une amine primaire, secondaires ou tertiaires, équivalente à la teneur en groupes acides, on ajoute ensuite la solution un polymère basique solide ou dissous dans un solvant dipolaire - aprotique, qui présente des groupes imidazole ou benzimidazole et/ou des constituants basiques contenant des atomes d'azote hétérocycliques, en particulier hétéroaromatiques selon la revendication 1, et on dissout également ce polymère dans la solution.

5. Procédé selon les revendications 1 à 4, **caractérisé ce qu'**on ajoute à la solution constituée par l'acide sulfonique polymère ou le sel d'acide sulfonique polymère, par l'acide phosphonique polymère ou le sel d'acide phosphonique polymère, par l'acide carboxylique polymère ou le sel d'acide carboxylique polymère et par le polymère basique contenant des groupes imidazole ou benzimidazole et/ou d'autres constituants basiques contenant des atomes d'azote hétérocycliques, en particulier hétéroaromatiques selon la revendication 1, un polymère supplémentaire qui présente des groupes azotés basiques primaires, secondaires ou tertiaires et on dissout ce polymère dans la solution.

6. Mélanges polymères d'acides - bases ou membranes constituées par des mélanges polymères d'acides - bases que l'on obtient conformément à un procédé selon les revendications 1 à 5.

7. Procédé selon l'une quelconque des revendications 1 à 5, **caractérisé en ce qu'**on met en oeuvre, à titre de polymère basique contenant des groupes benzimidazole le poly[(2,2'-m-phénylène)-5,5'-bibenzimidazole].

8. Utilisation de mélanges polymères selon la revendication 6, sous la forme de feuilles minces (membranes) à titre d'électrolyte conducteur de protons dans des piles à combustibles du type à membranes (piles à combustibles du type à électrolyte polymère pour la fabrication d'hydrogène ou encore piles à combustible pour la préparation directe de méthanol), dans l'électrolyse faisant appel à une membrane électrolytique polymère (PEM), dans l'électrodialyse aqueuse ou non aqueuse ou encore dans la dialyse par diffusion libre.

9. Utilisation de mélanges polymères d'acides - bases selon la revendication 6, sous la forme de feuilles minces (membranes) ou sous la forme de fibres creuses dans la pervaporation, la perstraction, dans la séparation des gaz, dans la dialyse, dans l'ultrafiltration, dans la nanofiltration ou encore dans l'osmose inverse.